# EUROPEAN PATENT APPLICATION

(11) **EP 2 924 563 A1**
(43) Date of publication of application: **30.09.2015**
(21) Application number: 15161458.3
(22) Date of filing: 27.03.2015
(51) Int. Cl.: G06F 9/44

(54) **Methods and systems for communications between apps and virtual machines**

(30) Priority: 27.03.2014 US 201461971029 P
(71) Applicant: Lin, Hsiu-Ping, Taipei City 100 (TW)
(72) Inventor: Lin, Hsiu-Ping, 100 Zhongzheng Dist., Taipei City (TW); Wu, Chi-Jen, 709 Annan Dist., Tainan City (TW); Shih, Hung-Bin, 700 West Central Dist., Tainan City (TW); Tsai, Hung-I, 115 Nangang Dist., Taipei City (TW)
(74) Representative: Hoefer & Partner Patentanwälte mbB

(57) **Abstract**

The present invention relates to a method of configuring a user interface on a client, wherein the user interface relates to an app executed on a server. The method may include the steps of coupling the client with the server where the app is executed, receiving a hardware setting related to the app from the server, transmitting the hardware setting to a driver on the client, and 5 configuring the user interface on the client with the driver based on the hardware setting.

## Description

The present invention relates to methods and systems for generating user interface of apps executed a server based on user settings or hardware settings. Specifically, it relates to configuring user interface of apps executed on a server on a client with local drivers of the client.

### SUMMARY OF THE INVENTION

An App Arowser (hereinafter "Arowser™") is first disclosed in U.S. Provisional Patent Appl. No. 61862967 named "METHODS AND SYSTEMS FOR IN-APPS SEARCH AND APP BROWSERS" filed on Oct. 7^{th}, 2013. Specifically, an app is executed on a remote server, and screen output of such app is then transmitted or streamed from the remote server to a client and shown on a client interface (e.g., on the Arowser™). With the help of the Arowser™ technology, a user can operate an app located remotely by interacting with its streamed screen output without the need to locally install the app. However, there are several challenges when implementing the Arowser™ technology. First, the speed and quality of streaming can be limited by network bendwith. Also, remote servers may not have sensors or hardware devices/modules commonly found in client devices. For example, a remote server may not have a GPS or AGPS module that allows the app to obtain the necessary geographic coordinate(s). If a user needs to tilt/turn/shake a client device (e.g., smartphones or tablets/pads, collectively referred as "smart devices" hereafter) when using a particular app (e.g., mobile gaming apps), servers lacking such sensor may affect user's experiences with the app.

Present invention provides systems and methods of generating user interface on a client. The method includes the steps of coupling the client with a server where an app is executed, receving a hardware data setting related to the app from the server, transmitting the hardware setting to a driver on the client, and configuring the user interace on the client with the driver based on the hardware setting. The hardware setting may include a rending command, parameter or texture. Configuring the user interface on the client may comprise rendering graphic of the app with a GPU on the client.

In another example, the present invention may provide a method of generating user interface on a client. The method may include the steps of coupling the client with a server where an app is executed, receving a hardware data setting related to the app from the server, transmitting the hardware setting to a drivert on the client, configuring the user interace on the client with the driver based on the hardware setting, dispatching a function corresponding to the hardware setting to the user interface, performing the function when the user interface is acted, and transmitting hardware data associated with the function to the server when the user interface is acted. The function being dispatched to the user interace comprises receiving hardware data from a Bluetooth, a Wi-Fi, an NFC, a camera, a GPS, a gyroscope, an e-compass or an accelerometer.

### BRIEF DESCRIPTION OF THE SEVERAL VIEWS OF THE DRAWINGS

FIG. 1A is a diagram illustrating a conventional mobile operating system;
FIG. 1B is a diagram illustrating exemplary rendering modules in the conventional mobile operating system;
FIG. 1C is a diagram illustrating exemplary components for rendering in the conventional mobile operating system;
FIGS. 2A and 2B are diagrams illustrating exemplary user interfaces generated in communications between an app and a virtual machine according to examples of the present invention;
FIG. 2B-1 is a diagram illustrating an exemplary rendering command in FIG. 2B;
FIGS. 2C and 2D are diagrams illustrating systems for communications between an app and a virtual machine according to examples of the present invention;
FIGS. 3A and 3B are diagrams illustrating systems for communications between an app and a virtual machine according to examples of the present invention;
FIG. 3C is a diagram illustrating details of the app to communicate with the virtual machine in FIG. 3A or 3B;
FIGS. 4A and 4B are diagrams illustrating systems for communications between an app and a virtual machine according to another examples of the present invention;
FIG. 4C is a diagram illustrating details of the app to communicate with the virtual machine in FIG. 4A or 4B according to one example of the present invention;
FIG. 4D is a diagram illustrating details of the app to communicate with the virtual machine in FIG. 4A or 4B according to another example of the present invention; and
FIGS. 5A-5C are flowcharts illustrating methods for communications between apps and virtual machines according to examples of the present invention.

### DETAILED DESCRIPTION

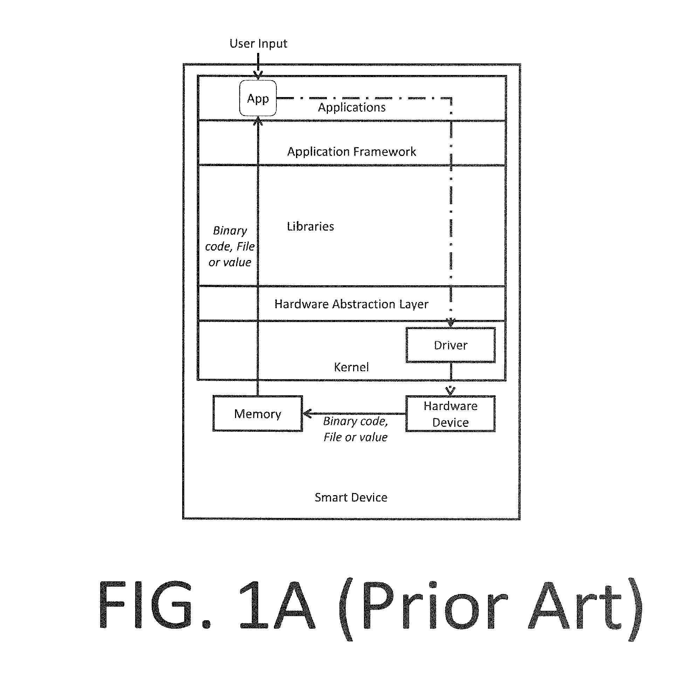

FIG. 1A is a diagram illustrating an architecture of an Android operating system, a type of mobile operating systems (mobile OSs, e.g., including Android, iOS, Windows, etc.) that runs on a smart device (e.g., a smartphone). Those skilled in the art understand that architecture of other mobile operating systems may have functions/structures similar to those described and illustrated in FIG. 1A, except some mobile OSs may not have a runtime like an Android runtime including Dalvik VM or core libraries (they may have other libraries or virtual machines). Some mobile OSs may not include a hardware abstraction layer (HAL) configured specifically for different hardware designs. Those skilled in the art also understand that differences among mobile OSs will not affect the claim scope of the present invention.

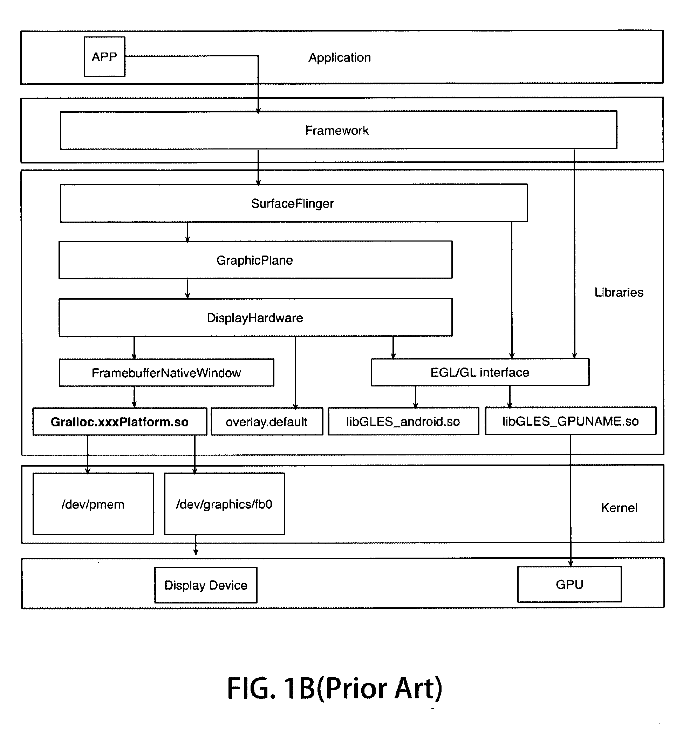

Conventionally, a mobile application (such as a downloadable, native, web-based or hybrid mobile app, hereinafter referred as an "app") in the application layer (which is noted as "Applications" in FIG. 1A) may use an API to get data from hardware resources of the smart device. API can also be used to generate file or data for the hardware device(s) (e.g., a chip, a sensor or a hardware module) according to user requirement or input. For the purpose of this specification, hardware data refers to any data from the hardware resources or generated by API for the hardware resources. For example, a user may install/execute/run/operate (hereinafter referred as "operate") an app on a smart device via the device's touch screen or other input means which would invoke driver(s) for the corresponding hardware device(s). Using a camera app with a camera module on a smartphone is an example of invoking hardware devices when operating an app. After a user touches or clicks a shutter button, the camera app instructs the camera module on the smart device to take a picture (i.e., to generate an image file in binary format such as raw, jpg, jpeg, png or other image format) and store the picture in memory (e.g., a RAM, a flash, a cache, an SD card or other storage space such as a cloud). FIG. 1B is a diagram illustrating another example of involving hardware devices (e.g., a display device or GPU) when rendering graphics. When an app performs graphic rendering, regardless of what graphic API (or rendering API) the app developers use, images are rendered into a buffer of pixel data called a "surface." Conventionally, a surface in Android corresponds to an off-screen buffer in which an app renders its content. Every window that is created on the Android platform is backed by a surface. Specifically, every window is a displaying result of a surface (all the pixels that form a window are stored in the surface/buffer). All visible surfaces that are rendered are composited into the display by SurfaceFlinger, an Android's system service (or a system-wide surface composer function which resides in android framework) that manages composition of surfaces. The SurfaceFlinger takes data (which is surface) from different app(s) which could be 2D or 3D and combine them to obtain one main surface to be fed into memory (which includes or can be configured to include a framebuffer). Moreover, the SurfaceFlinger calculates parameters such as those for overlapping, and invokes OpenGL ES.

From an app's point of view, each app may correspond to one or more graphical interfaces and each interface may be regarded as a surface having its position, size, content and other elements. Introduced in Android 3.0, hardware acceleration for Canvas APIs uses a new drawing library called OpenGLRenderer that translates Canvas operations to OpenGL operations so that they can be executed on GPU (i.e., hardware-accelerated Canvas). Today, a hardware GPU that supports OpenGL ES 2.0 is mandatory for Android devices running Android 4.0 or later version. Android provides OpenGL ES interfaces in the android.opengl package that app developers can use to call into their GL implementation with SDK or with native APIs provided in the Android NDK.

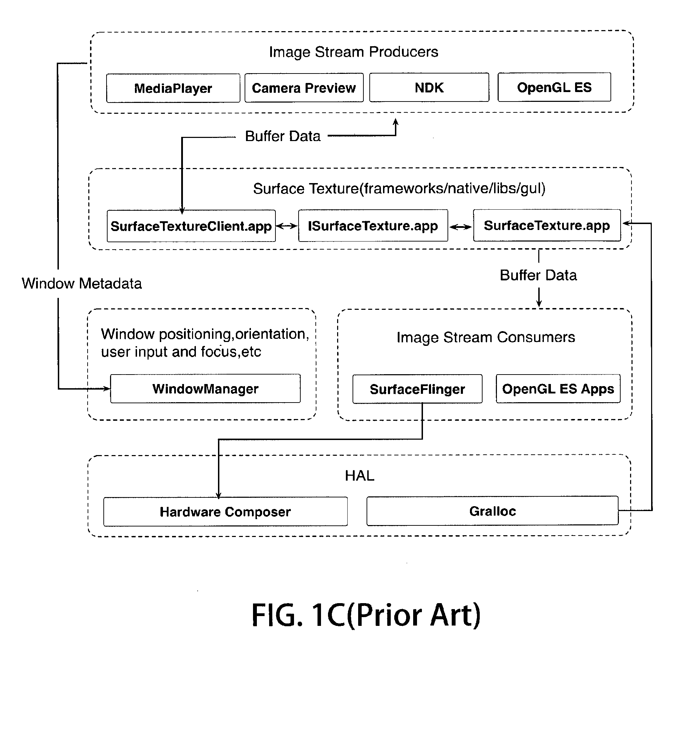

Components involved in graphics rendering can include Image Stream Producers, Image Stream Consumers, a SurfaceTexture, a Window Manager, a Hardware Composer, and a Gralloc, as shown in FIG. 1C. The Image Stream Producers can include an OpenGL ES game, video buffers from the media server, a Canvas 2D application, or anything that produces graphic buffers for consumption. The most common consumer of image streams is the SurfaceFlinger, which consumes the visible surfaces and composites them into a display using information provided by the window manager. Other OpenGL ES apps can consume image streams as well, for example, the camera app mentioned previously may be configured to consume a camera preview image stream.

The SurfaceTexture contains the logic that ties image stream producers and image stream consumers together and is made of three parts: SurfaceTextureClient, ISurfaceTexture, and SurfaceTexture (in this example, the SurfaceTexture is the actual C++ class and not the name of the overall component). These three parts facilitate the image producer (i.e. the SurfaceTextureClient), binder (i.e. the ISurfaceTexture), and the image consumer (i.e. SurfaceTexture) components of the SurfaceTexture in processes such as requesting memory from the Gralloc (which is a part of the HAL), sharing memory across process boundaries, synchronizing access to buffers, and pairing the appropriate consumer with the producer.

The SurfaceTexture can operate in both asynchronous and synchronous modes. In asynchronous mode, image producer is not blocked and image consumer may drop or skip frames. In the synchronous mode, the image producer may be blocked to allow image consumer to process textures. Some examples of image producers are the camera preview produced by the camera HAL or an OpenGL ES game.

The Window Manager is an Android system service that controls window lifecycles, input and focus events, screen orientations, transitions, animations, position, transforms, z-order, and many other aspects of a window (a container for views). A window is always backed by a surface. The Window Manager sends all of the window metadata to the SurfaceFlinger so that the SurfaceFlinger can use that data to figure out how to composite surfaces on the display.

The Hardware Composer is hardware abstraction (which is also part of the HAL) for a display subsystem. The SurfaceFlinger can abstract things like overlays and 2D blitters and delegate certain composition work to the hardware composer to offload work from the OpenGL and the GPU. This makes compositing faster than having the SurfaceFlinger do all the work. Moreover, the Gralloc allocates memory for graphics buffers. It has two parts: first part provides pmem interface, which is responsible for contiguous memory allocation; second part handles framebuffer refresh where UI actually put framebuffer data. The SurfaceFlinger performs the tasks of creating a new display hardware which is used to establish a FramebufferNativeWindow to determine the data output device interface; initializing OpenGL as it is the one which synthesizes; and creating main surface on which all surfaces will be merged.

A virtual machine may run a mobile OS capable of hosting mobile apps. Generally, virtual machine running mobile OS may have same or similar OS architecture with those described in FIG. 1A or 1B, except that the smart device in FIG. 1A or 1B is replaced with virtual machine running on a PC or a server. Accordingly, libraries or APIs related to hardware data are not coupled to real hardware (e.g., a GPU, a camera, sensors or chip, etc.) supported by mobile OS. Although mobile OS running on virtual machine can support various hardware resources (e.g., it may have APIs or drivers corresponding to the hardware), it cannot gather/receive hardware data, such as coordinates, tilts, rotation, shakings, proximity, lamination, etc., because it is not running on a device with real, physical hardware. In another example, although the PC/server on which the virtual machine is run may have hardware such as a GPU, the graphics API or driver in the mobile OS may still not be compatible with the hardware of the PC/server outside the virtual machine (e.g., GPUs for smartphones and servers may differ in both specifications, drivers, supported libraries and/or interfaces). The hardware resources on a PC or a server where the virtual machine is run may be different from those in a mobile device where mobile OS is designed to be run. These hardwares may include a Bluetooth, a Wi-Fi, a GPU, an NFC, a camera, a GPS, a gyroscope, a compass (e-compass), an accelerometer and other sensors.

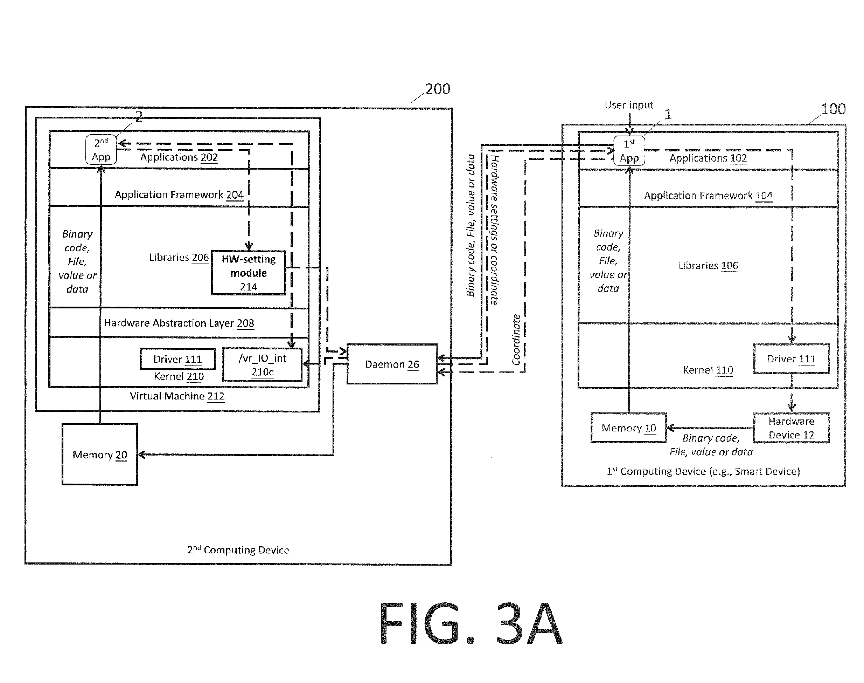

To address hardware limitations or prevent situations where lacking real hardware may negatively impact the operations of apps running on virtual machines (e.g., a second app 2 shown in FIG. 3A), FIGS. 3A-4C teach methods and systems that allow communications between mobile apps and the hardware on the client device.

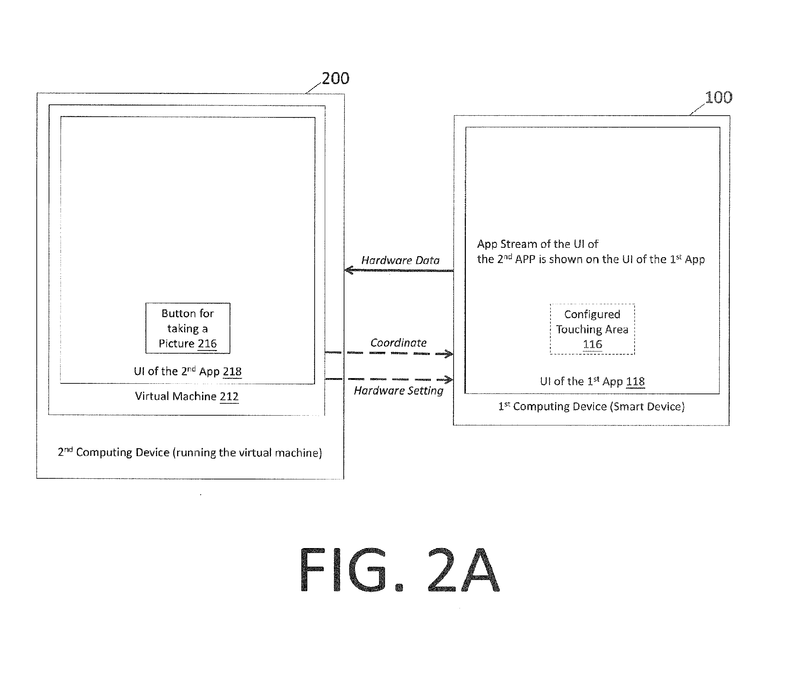

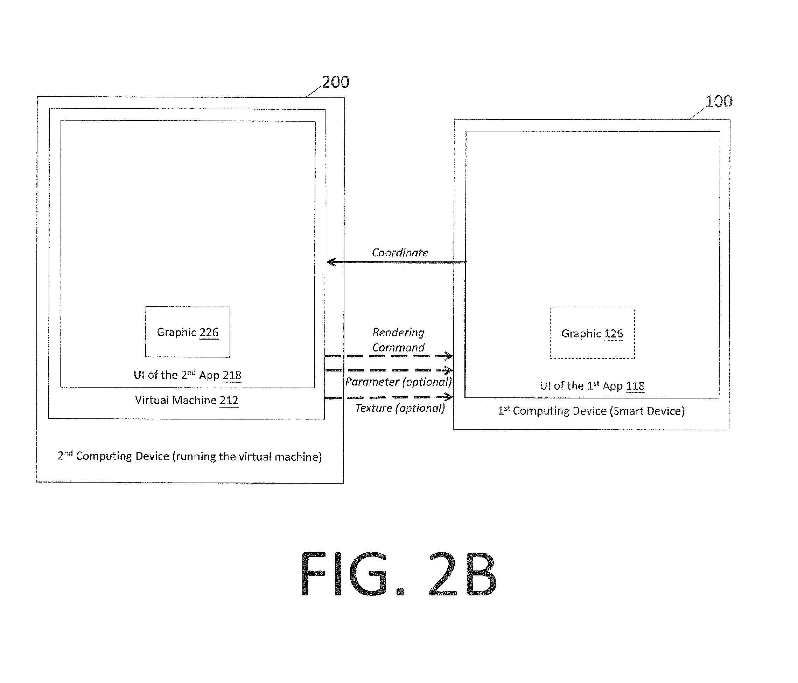

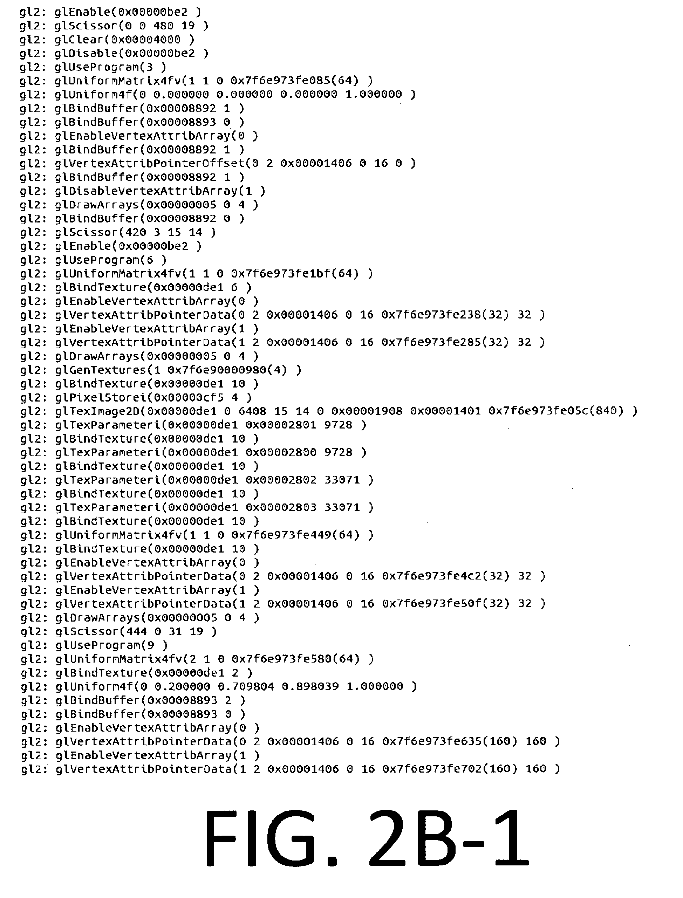

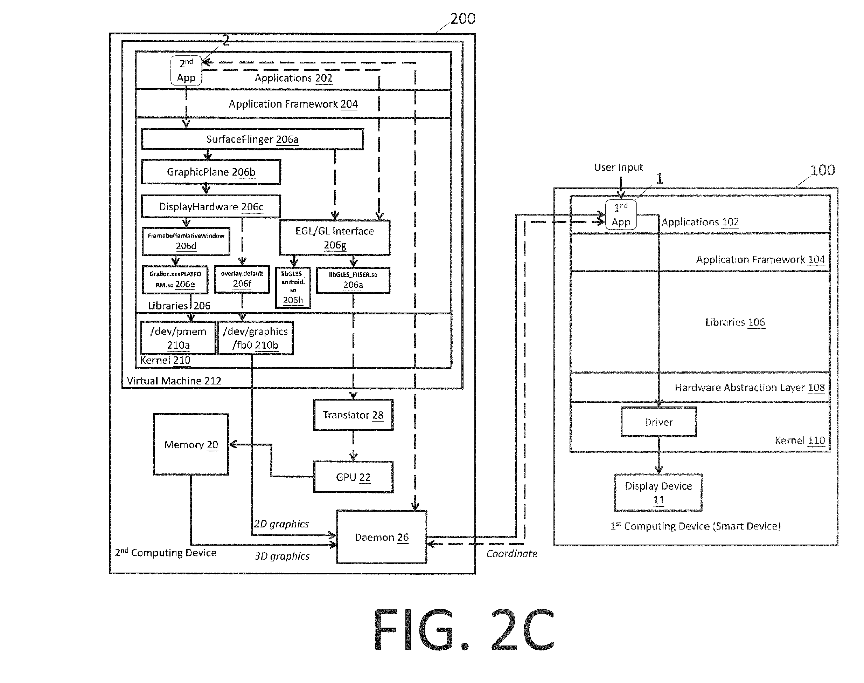

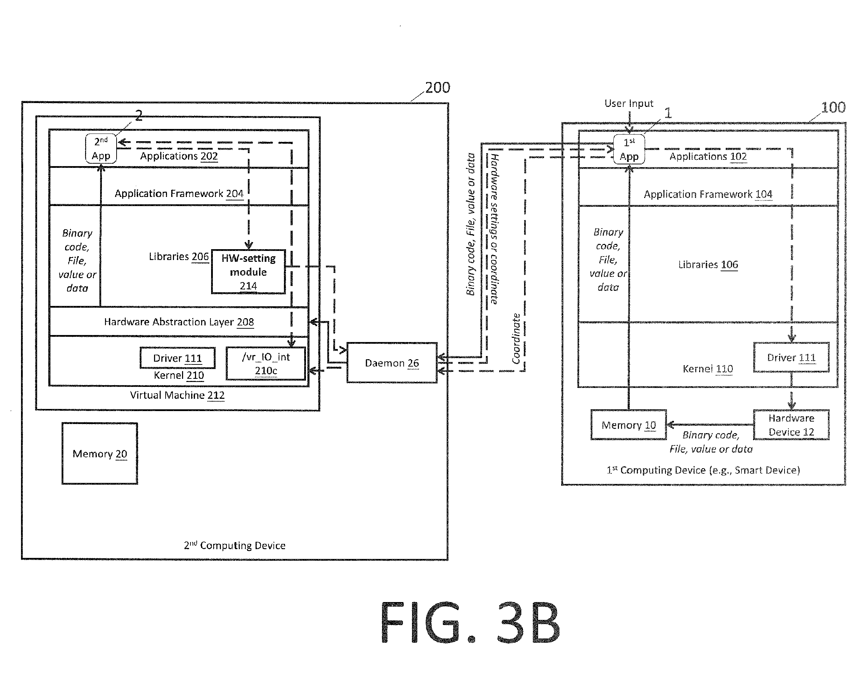

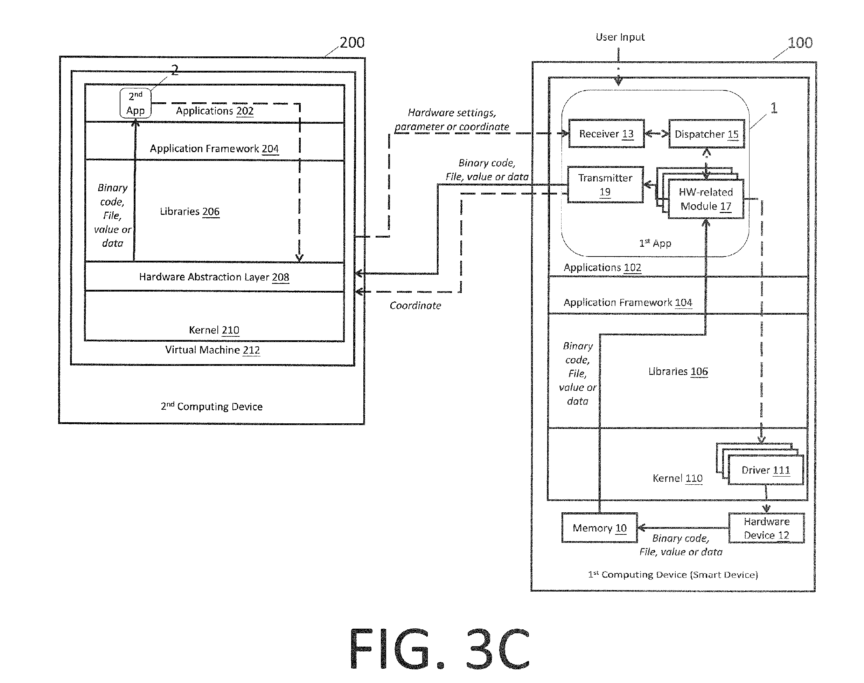

FIGS. 2A and 2B illustrate exemplary user interfaces 118 and 218 generated between a first app 1 and a virtual machine 212 according to the present invention. FIG. 2A describes using an app (which is second app 2 in this example) to take a picture with a camera (shown as a hardware device 12 in FIG. 3A, 3B or 3C) on a smart device (i.e., first computing device 100). In this example, first app 1 may be executed on first computing device 100 and second app 2 may be executed on virtual machine 212 that runs on second computing device 200. A user may use first app 1 to receive screen output (or UI 218) of second app 2 and display it as a screen output (or UI 118) of first app 1. Via the screen output/UI 218 of second app 2 shown on the screen output/UI 118 of first app 1, a user may further operate second app 2 by sending the coordinate of a point on UI 118 that was touched by user to a daemon 26, a software or a software server that runs on virtual machine 212 or couples with virtual machine 212 (please refer to FIG. 2C, 2D, 3A, 3B, 4A or 4B). If daemon 26 does not run on virtual machine 212 but instead couples with virtual machine 212, daemon 26 may be executed on second computing device 200 or on any computing device that couples with virtual machine 212 in the network. In another example, a remote desktop protocol may also be applied to generate a touch event to second app 2 when the user touches a point on UI 118.

In another example, the camera app (second app 2) may display a picture-taking button 216 on its screen output/UI 218. If the user operates second app 2 "remotely" via first app 1, first app 1 on first computing device 100 will need to know the position or shape of the button in UI 218 in order to display it properly on UI 118. First app 1 may have to couple with hardware device 12 (i.e., the camera module in this example) of first computing device 100 to complete the picture taking process when the position/area corresponding to shutter button 116 is touched/clicked by the user. Specifically, a hardware setting selecting a camera API to access the camera module of first computing device 100 may be generated. Such hardware setting may include a parameter such as the coordinate (e.g., 238, 458 - both numbers are in pixels) of button 216 at which to form button 116 on UI 118. And such hardware setting may be transmitted to first app 1.

After receiving hardware setting (with the parameter), first app 1 may generate button 116 at the point (238, 458) on its screen output (UI 118) and set it as the button that allows the camera API to access the camera module to take a picture when button 116 is touched or pressed.

After configuration based on hardware setting is complete (i.e. after configuring first app 1 based on the received hardware setting), when a user presses button 116 shown on UI 118, first app 1 may initiate the camera module of first computing device 100 to take a picture. Subsequently, the picture (in a file, binary code or other data format) may be transmitted to daemon 26. Daemon 26 may be configured to receive the picture and store it in memory 20. Next, second app 2 may go to memory 20 to retrieve the picture and display it on the screen output. From second app 2's perspective, it receives a touch command and initiates a camera module. However, what actually interacted with second app 2 may either be a pseudo camera driver configured to access hardware data (the picture received from the first app 118) in memory 20, or a hardware setting module 214 configured in virtual machine 212 to intercept second app 2's command/call relating to the camera API. Those skilled in the art understand that to display UI 118 (with button 116 included in), it is not necessary to display the screen output of second app 2 (UI 218) on virtual machine 212. In this specification, screen output (UI 218) of second app 2 including button 216 may be used to better describe the relationship between button 116 and second app 2. Virtual machine 212 can generate hardware setting and/or coordinates of button 116 without actually displaying UI 218 on any display device(s) of virtual machine 212 or second computing device 200.

For the purpose of the present invention, hardware setting may also comprise a rendering command, parameter or texture.

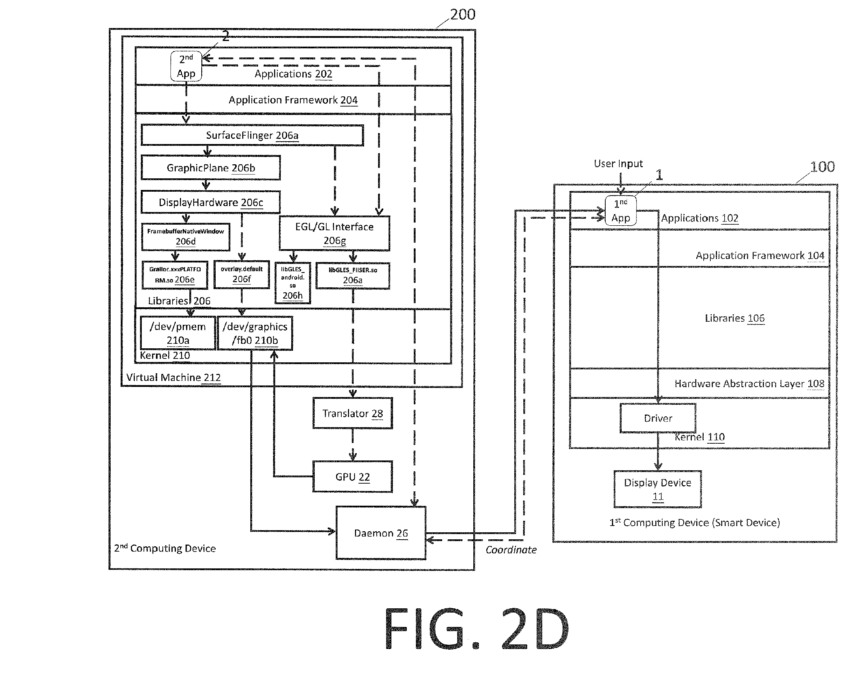

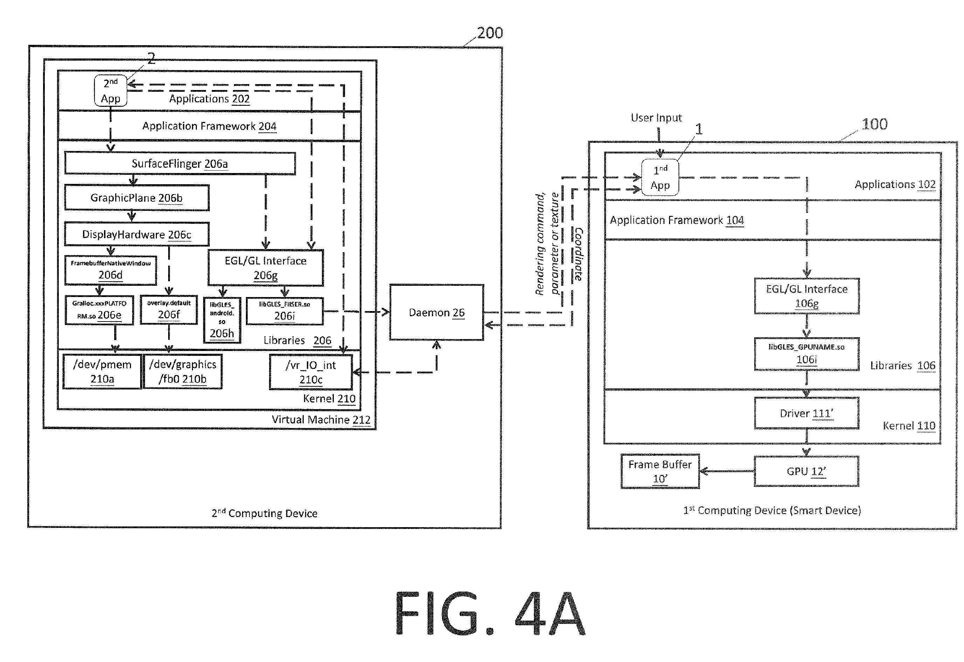

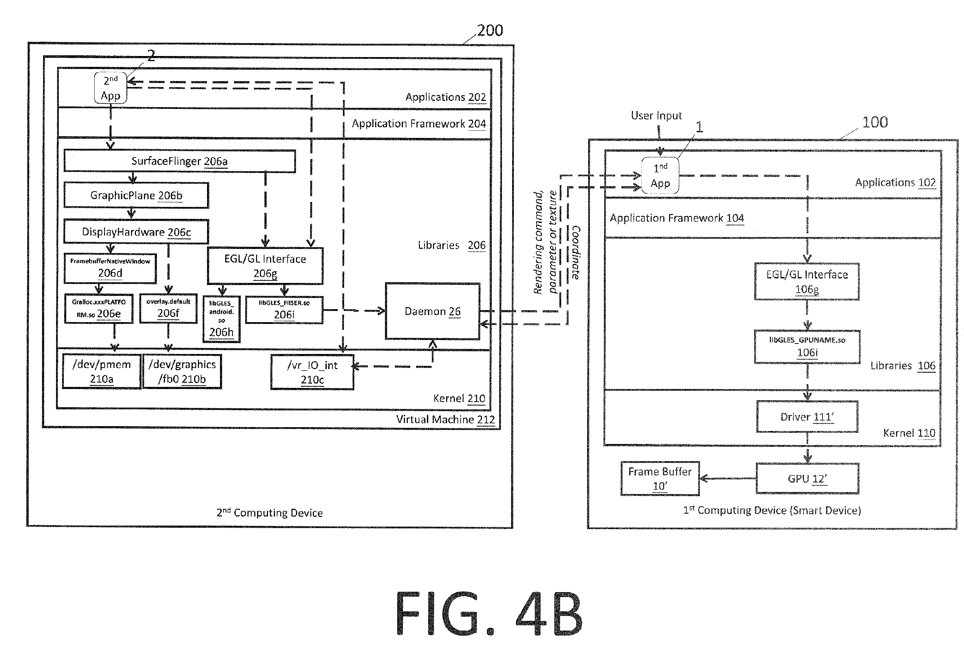

FIG. 2B illustrates an example of rendering a graphic 226 of UI 218 by using a GPU (which may be referred as hardware device 12 or GPU 12' in FIG. 4A or 4B) on first computing device 100 and showing a corresponding graphic 126 on UI 118 for user to operate second app 2 remotely. In this example, second computing device 200 or virtual machine 212 may not have a GPU or may have a GPU (e.g., a GPU 22 in FIG. 2C or 2D) but hardware settings, such as rendering commands, generated from virtual machine 212 or the mobile OS where second app 2 is executed may not be compatible with the GPU. For example, if second app 2 is an Android app and virtual machine 212 is implemented as an Android virtual machine, second app 2 may generate OpenGL ES commands (as the rendering commands) to the GPU via libraries 206, for example, an EGL/GL interface 206g (EGL/GL interface 206g may be a part of HAL 208 in some examples of the present invention) or a GLES library (not shown). However, OpenGL ES cannot directly instruct the local GPU to render graphics because the GPU on second computing device 200 (or the server) may only accept OpenGL commands, not OpenGL ES commands.

Referring to FIG. 2C or 2D, a translator 28 (which may be implemented in virtual machine 212 or in second computing device 200 but outside of virtual machine 212) may be configured to translate OpenGL ES commands from libraries 206 (the commands can be received/intercepted/retrieved from EGL/GL Interface 206g or libGLES_FIISER.so 206i) to OpenGL commands for local GPU 22 to render 3D graphics based on the OpenGL ES commands. In one example, the 3D graphics rendered by GPU 22 may be kept in memory 20 (wherein a part of memory 20 may be a framebuffer in this example), and the 3D graphics in the framebuffer may subsequently be accessed by daemon 26 and transmitted to first app 1 and displayed as app stream on UI 118 or the screen output of first app 1, as shown in FIG. 2C. In another example, the rendered 3D graphics may be kept in the same location with 2D graphics, for example in a module in kernel 210 called "/dev/graphics/fb0 210b". In this example, daemon 26 may access this same location to stream both 2D and 3D graphics to the client, as shown in FIG. 2D. However, the two examples illustrated with reference to FIGS. 2C and 2D may require more bandwidth when transmitting the app streams (including the 2D and/or 3D graphics) to the client.

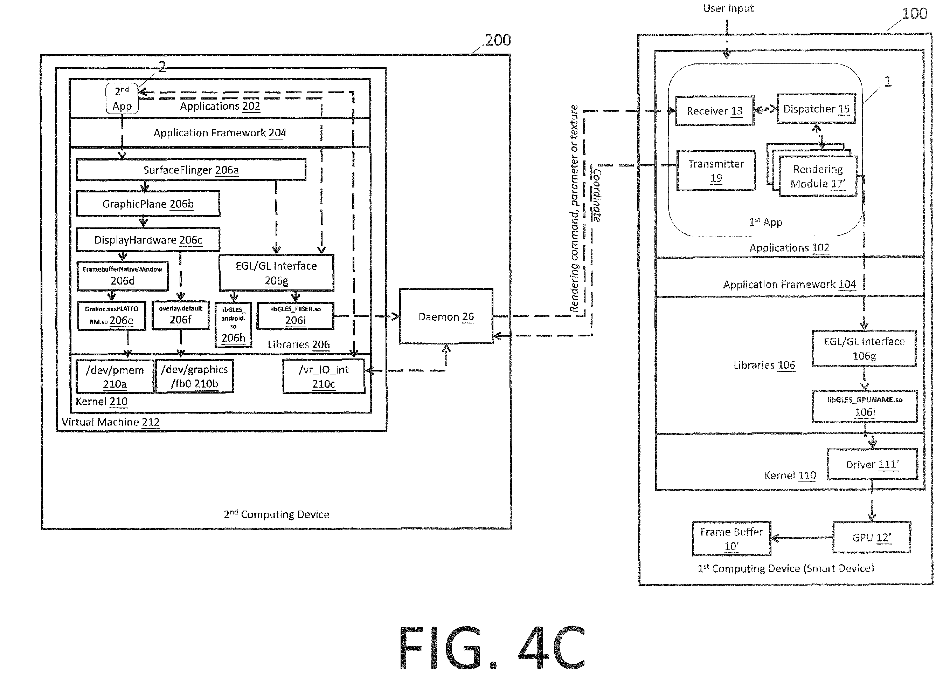

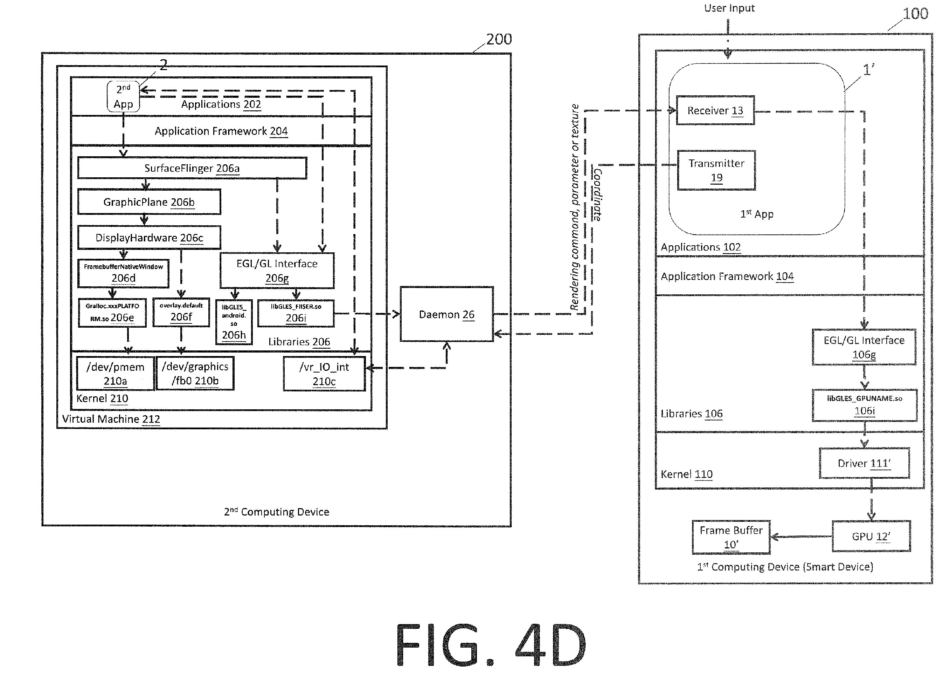

Referring to FIG. 2B again, when rendering a graphic of second app 2, a rendering command may be transmitted to first computing device 100 and received by first app 1 via internet. Then, first app 1 may send rendering command to its local GPU 12' (or may convert the rendering commands to a format compatible to local GPU 12') to render graphics corresponding to the rendering command on a frame buffer 10' (which can be at least a part of the memory 10). Details of this example will be described later with reference to FIG. 4A, 4B, 4C or 4D. In this example, the graphics may be displayed on first computing device 100.

In one example, the rendering command may collocated with a parameter such as memory (framebuffer) address/location, an RGB value, color code or depth of an object for the graphic to be rendered or a location/position/length/width to render the graphic. In another example, texture used in rendering graphics may also be transmitted to first app 1. A part of an exemplary graphic/frame to be rendered with commands in the Android OS may look like those shown in FIG. 2B-1, wherein "glBindTexture" may be a rendering command (in this example, an OpenGL ES command) and "0x00000de1" and "6" may be parameters in line 21. Moreover, the first parameter "0x00000de1" may be used to indicate a "target" while the second parameter "6" may be used to indicate a kind of textures used in rendering. Those skilled in the art understand that when rendering a single graphic, an object or a frame, it sometimes requires processing a plurality of rendering commands (e.g., those shown in FIG. 2B-1 may only be executed to render one graphic/object/frame), and thus the present invention should not be limited to rendering "one graphic" with "one rendering command".

In the aforementioned example(s) related to FIG. 2B (and/or FIG. 4A, 4B or 4C), since only rendering command and/or parameter/texture are transmitted to client, it requires less bandwidth than those described and illustrated with reference to FIG. 2C or 2D when rendering the entire UIs/screen outputs of second app 2 on the client.

In one example, rendering command may be included in hardware setting (which may be generated by hardware-setting module 214 shown in FIG. 3A or 3B) or may itself be the hardware setting to be transmitted to first app 1. Here, when hardware setting (or rendering command) is received, first app 1 may dispatch a hardware-related module (i.e., rendering module 17' in FIG. 4C) to perform a rendering task based on the hardware setting (or the rendering command). In this example, to display a screen output of second app 2 on UI 118/screen output of first app 1, a plurality of rendering commands that deals with the hardware-related module (i.e., the rendering. module 17') is needed to render graphics based on the rendering commands.

In another example, hardware-setting module 214 may be configured to generate a hardware setting when rendering command(s) is generated at an EGL/GL interface 206g (or a libGLES_FIISER.so 206i), and send the hardware setting with the rendering command (and/or the parameter/texture when necessary) to daemon 26 for transmitting to first app 1. In this example, after receiving the hardware setting (and/or the parameter/texture), first app 1 may dispatch a hardware-related module (e.g., the rendering module 17') coupled to GPU 12' on first computing device 100 to process the rendering command(s) (and/or the parameter/texture).

First app 1 may send the rendering command (and/or the parameter and/or the texture) to its local GPU 12' to render graphic 126 (which corresponds to graphic 116 that should be shown on UI 218 of second app 2). To render graphic 126 with GPU 12' according to the present invention, it is not necessary to render in a framebuffer or to display UI 218 and graphic 226 on virtual machine 212 or on second computing device 200.

When a user interacts with UI 118 shown on the screen of first computing device 100 (e.g., by touching the screen of the smartphone), a coordinate on screen/UI 118 representing the location where the user touched may be transmitted to daemon 26 by first app 1. In one example, daemon 26 may generate a corresponding input event to virtual machine 212. In another example, daemon 26 may send the coordinate it received to virtual machine 212 and a virtual IO module/interface (e.g., a vr_io_int 210c in FIG. 3A, 3B, 4A or 4B) may generate a corresponding input event to second app 2. In one example, vr_io_int 210c may be configured to transmit/receive/buffer general input/output to/from the second app 2. Moreover, the general input/output may include an image, an audio or other hardware data. In another example, vr_io_int 210c may be a type of pseudo drivers.

Next, second app 2 may receive an input event and respond to such input event accordingly (e.g., receiving notice that shutter button 216 is pressed based on the coordinate and using the camera API on virtual machine 212 to take a picture). Operating second app 2 on the virtual machine/server remotely via first app 1 on first computing device 100 is therefore achieved.

FIG. 3A illustrates a system for communication between first app 1 and virtual machine 212 according to an example of the present invention. Referring to FIG. 3A, dash lines represent API calls/function calls/system calls, commands/instructions and/or parameters/values (e.g., in JSON or XML structure), while solid lines represent hardware data transfer, e.g., picture or other kinds of hardware data (may be a file, binary code, and/or value/data in JSON/XML structure which comes from hardware device 12 or first app 1). In this example, to generate hardware setting and/or parameter/texture for configuring button 116 on client, virtual machine 212 or hardware-setting module 214 may first need to know the range of coordinates relating to the location of button 216 when button 216 is displayed on screen output/ UI 218 of second app 2 (so that it can cause first app 1 to configure button 116 on screen output/UI 118 of first app 1).

In one example, the location (represented by the coordinate) may be known by analyzing second app 2 in advance. For example, assuming second app 2 is an Android app, codes related to layouts or APIs that second app 2 uses may be extracted/retrieved from an application package file (apk) of second app 2 when second app 2 is analyzed by an analyzer (not shown). The analyzer may be a program configured to disassemble/recover/decode/decompress the apk file of second app 2. An exemplary analyzer to the apk file can be found in the Android-Apktool (referred in https://code.google.com/p/android-apktool/). For example, an AndroidManifest.xml file may show the number of activities, intent filters, hardware devices or APIs required to execute second app 2. Or the position of button 216 may be known from code(s) in the apk file of second app 2. Hardware setting related to second app 2 may therefore be generated in advance (i.e., after the analysis and before user initiates second app 2 from the client remotely). Once second app 2 is initiated, hardware setting (together with the parameter/coordinate when necessary) may be transmitted to first app 1.

### Configuring Views/Touching Areas and Coupling Corresponding Hardware Devices after Receiving Hardware Settings

In another example, hardware setting may be generated dynamically when a user operates second app 2 via app stream shown on UI 118/screen output of first app 1. To start, the user may initiate a process via first app 1 on first computing device 100 to operate second app 2 on virtual machine 212. The user may touch the screen of first computing device 100. This generates an input event (e.g., a touch event), such as "TOUCH (238, 458)", representing that the user touches a point (or a coordinate) addressed (238, 458) in pixels on a screen output displayed on first computing device 100. For example, in pixels, for a layout/screen output with 480x800 resolution, the point/coordinate (238, 458) means a point located at the 238-th pixel in row and 458-th pixel in column from a reference point, for example, a most left-top pixel of the window displaying an activity of first app 1. In one example, the touch event may be transmitted to second computing device 200 (via or by the help of daemon 26) as an input to second app 2. In another example, first app 1 may only transmit the coordinate to daemon 26. Daemon 26 may then send the coordinate to vr_io_int 210c, and vr_io_int 210c may generate an input event (e.g., a touch event) associated with the coordinate (238, 458) on the UI 218 of second app 2 and send it to second app 2.

In another example, after receiving the touch event, second app 2 may treat it as an input event acting on the coordinate (i.e., the point (238, 458)) on UI 218. Those skilled in the art understand that the relative coordinates of the touch event on virtual machine 212 and first computing device 100 do not need to be the same because resolution and size of the two screens may be different. However, the relative position of the touch event on both screens should be the same. For example, first computing device 100 may be a tablet PC but virtual machine 212 may simulate a smartphone having different screen resolution. Here, the resolution of the tablet PC may be "2048 x 1536 pixels," while UI 218 of virtual machine 212 or the second app 2 may only be "480 x 800 pixels". It only requires a conversion between any two different kinds of resolutions of UIs in examples of the present invention.

Next, second app 2 may respond to the touch event as if the user is directly touching a point corresponding to (238, 458) on UI 218. In this example, point (238, 458) may locate in a range of shutter button 216 on UI 218, and second app 2 may use a second camera API (not shown) after receiving the touch event. Since virtual machine 212 does not have a camera module (or relative hardware device), hardware-setting module 214 may be configured to intercept the call when/before it is sent to a camera driver (i.e. a driver 211 or a pseudo camera driver in this example) on virtual machine 212. Hardware-setting module 214 may generate a hardware setting (e.g., a value or a set of values) that dispatches hardware-related module 17 (shown in FIG. 3C) to use a first camera API (not shown) on first computing device 100. The hardware setting may be transmitted to first app 1 by daemon 26 via internet (e.g., via HTTP protocol).

In one example, a pair of coordinates transmitted with hardware setting can be used to configure a rectangular area (i.e., shutter button 116) on screen output/ UI 118 of first app 1 (i.e., the pair of the coordinates mean, e.g., a left-top and right-down point of the area to be configured). First app 1 may be configured to couple the area with corresponding API (or hardware device), or with a camera (i.e., hardware device 12) of first computing device 100, based on the received hardware setting. In another example, the step of transmitting the pair of coordinates back to first app 1 may not be necessary since first app 1 may be configured to generate button 116 with predetermined size/area/shape (i.e., it may generate a predetermined sized/shaped button once it receives a hardware setting and a coordinate), and it may only configure the area in the predetermined size/shape at the coordinate where the user touched.

Referring to FIG. 3A, first app 1 may use a camera (hardware device 12) via the first camera API (e.g., initiating a first camera driver, that is, a driver 111 on first computing device 100) to take a picture or an image in binary format (i.e., the hardware data e.g., binary code, file value or data) .The picture may be sent to memory 10 or other storage (not shown), and first app 1 may access memory 10 or the storage to get the picture. Next, first app 1 may transmit the hardware data (i.e. the picture/image) to daemon 26, and the hardware data may be kept in memory 20. Moreover, first app 1 may also notify virtual machine 212 (thru daemon 26) that the picture is successfully taken by hardware device 12. After receiving the notification, second app 2 may access memory 20, that is, app 2 may use the picture (i.e., to display the picture on UI 218 or include the picture in the screen output of second app 2). In this example, this process may be perceived as if second app 2 uses second camera API to access the picture.

Those skilled in the art understand that although daemon 26 is described in the aforementioned example(s) as locating in second computing device 200, daemon 26 may be implemented in computing device(s)/server(s) that coupled with second computing device 200. Those skilled in the art also understand daemon 26 may also be implemented in virtual machine 212 (e.g., in the libraries 206 similar to those shown in FIG. 4B) according to the present invention.

Referring to FIG. 3B, the system and method to get and transmit hardware data from first app 1 to virtual machine 212 or second app 2 may be similar to those described with reference to FIG. 3A, except that, for example, the daemon may be configured to transmit hardware data (e.g., the picture) to virtual machine 212 directly (hardware data is not kept in memory 20 first), and virtual machine 212 may be configured to receive hardware data, for example, with driver 211 or hardware abstraction layer (HAL) 208. In this example, second app 2 may not discern the difference between it being executed on a real smart device having a camera module (hardware device) or on virtual machine 212 when receiving pictures (hardware data) from the client because the reception of hardware data is in similar fashion (the hardware data are come from either HAL 208 or driver 211). In one example, driver 211 (e.g., a camera driver configured to couple with the camera API) may be configured to "get (or receive)" the hardware data directly from internet (i.e., by the help of daemon 26), rather than from any hardware device(s), and pass it to second app 2 or store the hardware data in memory 20 for second app 2 to access.

In another example, HAL 208 may receive hardware data (the picture) directly from the internet (i.e., by the help of daemon 26) and pass it to second app 2 or store it in memory 20 for second app 2 to access. In this example, virtual machine 212 may not include driver 211 (pseudo driver 211 is optional because hardware data is transmitted to HAL 208 directly and is passed to second app 2 by HAL 208), or driver 211 may be only a pseudo driver having no function(s) working as driver 111.

### Parameters Received with Hardware Settings

In one example, parameters such as coordinates may designate the center of a view (e.g., center of button 116) when the size of the generated view is fixed. In another example, pair of coordinates, e.g., (230, 450) and (255, 470), can also be used to designate the positions of the left-top corner and the right-down corner of the view , and generate such view at a location on UI 118 of first app 1 according to the coordinates.

In one example, parameters may include a tag. In this example, the method of the present invention may further include steps of receiving the tag (e.g., <button>) corresponding to an event a view handles wherein the event handled by the view is same or similar to the corresponding view (e.g., the button 216) of the second app 2, and configuring the view to have the function corresponding to the tag.

In one example, a view on the UI/layout corresponding to the button may be generated locally by the Arowser™, and thus the view's resolution may be fixed. However, the rest of UI 118 or the screen output of first app 1 (or those displayed on the screen of first computing device 100) may include the display of app stream(s) coming from second computing device 200 (or virtual machine 212). Accordingly, resolution may be configured to be adjustable or adaptive depending on network condition(s). For example, resolution may become 1080P when the network speed is high or 360P when the network speed is low.

### Arowser™: Dispatching Corresponding Hardware Devices after Receiving Hardware Settings

Conventionally, components and corresponding positions of the components in a layout of a UI or a function/activity/view of an app (especially a native app) may be fixed by the app developers, whether the environment is iOS, Android or Windows. For example, a developer may program a view representing a button on the UI of an app and gives the button a function where users can submit data or select/confirm certain condition(s). In Android, a public class called "View" represents the basic building block for user interface components (usually a View may occupy a rectangular area on a screen output and is responsible for drawing and event handling). However, it may not be the case for the Arowser™ since a user may use the Arowser™ to operate various kinds of apps residing on a remote virtual machine (e.g., the virtual machine 212). If the Arowser™ can only provide a fixed UI(s) for displaying app stream (including, e.g., one or more snapshots or part or full time-lapsed visual output of a certain app executed on the remote virtual machine referred in U.S. Provisional Application No. 61951548), it cannot perform as an "one-for-all" app that couples different apps with different hardware devices via corresponding APIs. For example, first app 1 is the Arowser™ or includes the Arowser™. When a user operates a navigation app executed on virtual machine 212 via Arowser™, because the navigation app runs on the virtual machine (usually it is run on a server or a pc) without directly coupling to a real GPS/AGPS module (i.e., virtual machine 212 may not include/connect to any GPS/AGPS module), the GPS signal received by the client may not be transmitted to the navigation app if Arowser™ is not configured to perform positioning and navigation functions (e.g., developers of Android apps are required to insert a line in the code to load a class called "GpsSatellite" in the android.location package to get the coordinates in before packing the application package file (e.g., an apk file in Android), and to design a map UI and/or a positioning button to couple with the API.

Since it is difficult to develop a "one-for-all" app because users behave differently and apps have different features and require different hardware, the present invention may address these challenges by loading a plurality of classes by default. For example, the Arowser™ (first app 1) may couple with a plurality of drivers prior to receiving any hardware setting, and later transmit the relevant hardware data from the selected driver to second computing device 200 based on the hardware setting. In another example, the Arowser™ may dynamically configure itself to load various kinds of classes or to couple with various kinds of hardware devices on the same client when receiving hardware settings. For example, configuration may include a program implemented/practiced in response to the hardware setting(s) to load corresponding class (or classes). FIG. 3C is a diagram illustrating details of first app 1 in FIG. 3A or 3B. Referring to FIG. 3C, first app 1 may include a receiver 13, a dispatcher 15 and a plurality of hardware-related modules 17. Receiver 13 may be configured to receive hardware setting related to second app 2 from virtual machine 212. The plurality of hardware-related modules 17 may be configured to receive hardware data from at least one driver (e.g., driver 111) on the client (i.e., first computing device 100 in this example). In one example, the plurality of hardware-related modules 17 may be configured to receive hardware data from hardware device 12 (or 12' in the following examples described and illustrated with reference to FIG. 4A or 4B). Hardware device 12/12' may include a Bluetooth, a Wi-Fi, an NFC, a camera, a GPU, a GPS, a gyroscope, an accelerometer, a thermometer, a magnetometer, an e-compass, a barometer, a proximity sensor, a hygrometer, a voice/audio/mic phone and an image sensor. In one example, the hardware data may include but not be limited to a value(s)/data/file of/related to acceleration force (in m/s²), the ambient temperature (°C), the force of gravity (in m/s²), the rate of rotation (in rad/s), the ambient light level (illumination, in lx), the geomagnetic field, the ambient air pressure (in hPa or mbar), the proximity of an object relative to the view screen of the device (in cm), the relative ambient humidity (in %), coordinates (GPS/AGPS module), the NFC, the voice/audio/mic phone, the image sensor and/or the image/graphic.

In one example, each of the plurality of hardware-related modules 17 may be configured to couple with one of the aforementioned hardware devices and receive corresponding hardware data. Moreover, dispatcher 15 may be configured to dispatch one of the plurality of hardware-related modules 17 to receive hardware data from a driver (i.e., driver 111) corresponding to the hardware setting.

In one example, first app 1 may further include a transmitter 19. Transmitter 19 may be configured to transmit hardware data from the driver (the driver 111) to virtual machine 212.

In another example, first app 1 may be configured to generate UI 118 on the screen of first computing device 100, and an user interface (e.g., the button 116) may be configured on the screen output of first app 1. In this example, transmitter 19 may be configured to transmit hardware data it received to daemon 26 (or virtual machine 212) when the user interface is acted (e.g., touched or tapped by a user or clicked by a mouse cursor).

In other example, a buffering module (not shown) coupled with transmitter 19 may be configured to buffer hardware data in the storage (not shown, e.g., an SD card) or memory (e.g., memory 10 or other memory) of the client (first computing device 100) when there is no network service. In this example, transmitter 19 may be configured to transmit hardware data to daemon 26 (or virtual machine 212) after network resumes.

In the present invention, hardware setting provides an app or API instructions regarding which hardware device to access in order to obtain hardware data. In one example, a hardware setting may be a value or a set of values used to configure the hardware device(s) required for operating second app 2 on virtual machine 212 via firs app 1. If there are eight sensors/hardware devices on first computing device 100, the hardware setting may include eight digits (each has a value of "0" or "1") representing the requirement of the hardware/hardware data of second app 2. A hardware setting of (0, 1, 1, 0, 0, 0, 0, 0) may mean that the hardware data of the second and third hardware are required and therefore such data should be obtained and directed from first computing device 100 to virtual machine 212. In another example, since hardware-related modules 17 may include a method/class/API or may receive a hardware data, first app 1 may use a corresponding method/class/API for the hardware data after receiving a hardware setting. In other example, a hardware setting may include a JSON file comprising a name and/or parameter of the method/class/API that appoints first app 1 to receive the corresponding hardware data when operating second app 2 via first app 1 remotely.

### Arowser™: Input Events Generated by the Arowser™ Remotely

The Arowser™ (e.g., first app 1) may display app stream(s) of second app 2 to include button 116. In this example, when a user wants to take a picture via Arowser™ (or via the UI of second app 2 displayed as app stream(s) shown on UI 118 or on the screen of first computing device 100), he/she may touch the button 116, and this touch event is transferred to daemon 26 or virtual machine 212 and inputted to second app 2. Next, second app 2 may initiate corresponding activity based on the touch event, and may use related API (i.e., the camera API on virtual machine 212 in this example) to do it. In this example, virtual machine 212 may know that second app 2 wants to use a camera to take the picture. Meanwhile, first app 1 may initiate activity for taking picture and hardware device 12 (the camera module) of first computing device 100 may take a picture and keep it in memory 10 or other storage device of first computing device 100 (not shown). First app 1 may transmit the picture to HAL 208 or memory 20 (e.g., thru daemon 26), and the picture may be shown with the activity initiated by second app 2. In this example, the touch event, instead of the coordinate of the point touched by the user on the client, may be inputted to second app 2 directly for to deal with hardware-related activity.

### Rendering Graphics on Clients

Another embodiment of the present invention directs to generating user interface on a client. Specifically, the present invention teaches transmitting hardware setting associated with an app on a server/virtual machine to a client, and subsequently a driver on the client may configure a user interface on the client based on the hardware setting from the app on the server/virtual machine. The hardware setting may comprise a rendering command, parameter or texture which allows drivers on the client to render graphic of the apps on the server/virtual machine using a hardware device, e.g., GPU, on the client. In an alternative embodiment, another app can be executed on the client to help configuring user interface, i.e., rendering graphic, of the app on the server/virtual machine on the client with a GPU on the client.

In the following detail description of the present invention, we designate first app 1 as an app executed on the client and second app 2 as an app executed on the server/virtual machine. FIG. 4A or 4B is a diagram illustrating a system for communications between first app 1 and the server or virtual machine 212 using hardware device on the client (i.e., hardware device 12 or GPU 12') to render graphics of second app 2 on the server or virtual machine 212. Referring to FIG. 4A (together with FIG. 1B again), as a native Android OS runs on first computing device 100, a rendering driver and/or interface may be present, i.e., a driver 111' and/or a "libGLES_GPUNAME.so (the name of .so may be different for different kind of smart devices) 106i that drives GPU 12' to render graphics based on hardware seeting such as rendering commands (e.g., OpenGL ES commands), for an app executed on the Android OS on first computing device 100 (i.e., rendering with "local" GPU). However, since second computing device 200 may not include a GPU that understands rendering command(s) (e.g., OpenGL ES commands) generated by second computing device 200 (or virtual machine 212), a libGLES_FIISER.so 206i may be configured to replace the role of the rendering driver, and it may direct daemon 26 to transmit the rendering commend(s) to first app 1 (via internet) instead of transmitting the rendering command(s) to the local GPU since the local GPU may not exist or may not be compatible to do the rendering.

Referring to FIG. 4A, a hardware setting, for example a rendering command (e.g., an OpenGL ES command), may be extracted/intercepted/retrieved/received at EGL/GL interface 206g or libGLES_FIISER.so 206i. In one example, a parameter and/or texture corresponding to the rendering command may be extracted/intercepted/retrieved/received at EGL/GL interface 206g or libGLES_FIISER.so 206i. Those skill in the art understand that rendering commands or parameters/textures may be extracted/intercepted/retrieved/received from second app 2, from other part of libraries 206 (e.g., when second app 2 uses rendering API such as OpenGL API to draw or manipulate objects in graphics) or from other part of kernel 210. The claim scope of the present invention should not be limited to the location in which the hardware settings, e.g., rendering commands or the corresponding parameters/textures, are extracted/intercepted/retrieved/received.

The rendering command and/or the parameter/texture may be sent to daemon 26, and daemon 26 may be configured to transmit such commands to first app 1. Referring to FIG. 4B, the system for communications between first app 1 and the server (second computing device 200 or virtual machine 212) is similar to those illustrated with reference to FIG. 4A, except daemon 26 may be configured in virtual machine 212. In one example, daemon 26 may be configured in libraries 206. In another example, daemon 26 may be configured in kernel 210. Those skilled in the art understand that daemon 26 may be configured in second computing device 200 or in other computing device(s) (e.g., server or cloud) coupled with virtual machine 212 to receive rendering command and/or communicate with vr_io_210c and first app 1.

After receiving rendering command and/or parameter/texture, first app 1 may send such commands to EGL/GL interface 106g (and/or to libGLES_GPUNAME.so 106i) or to driver 111' for rendering graphic(s) with GPU 12'. Those skilled in the art understand that for apps or mobile OSs other than the Android, there may not be an interface like EGL/GL interface 106g, but instead a library or a driver that drives a GPU on the client may be present. Therefore, the present invention should not be limited to rendering the graphic(s) only via EGL/GL interface 106g.

FIG. 4C illustrates the architecture of first app 1 communicating with second computing device 200 or virtual machine 212 according to one example of the present invention. Referring to FIG. 4C, similar to those describe in FIG. 3C, first app 1 may include receiver 13, dispatcher 15, transmitter 19 and a plurality of hardware-related modules 17, wherein one of the hardware-related modules 17 is a rendering module 17'. Receiver 13 may be configured to receive rendering command (e.g., OpenGL ES command) and/or parameter/texture via internet. Similarly, dispatcher 15 may be configured to dispatch one of the hardware-related modules 17 (e.g., rendering module 17' in this example) to render graphics based on the received rendering command. Rendering module 17' may be configured to map the rendering command from daemon 26 to an API call and to generate a mapped API call to use the rendering API (e.g., OpenGL ES 1.0/1.1 API packages, OpenGL ES 2.0 API package and OpenGL ES 3.0/3.1 API packages) to render graphics. In other words, rendering module 17' may be configured to use the rendering APIs with a plurality of API calls and each of the API calls may correspond to a specific rendering commands (received from the daemon 26). In this example, a new rendering command (together with the parameter and/or texture if necessary) identical or similar to the rendering command from daemon 26 may be generated on the client after rendering module 17' selects the rendering calls/APIs based on the received rendering command. The rendering command generated on the client may be transmitted to driver 111' (e.g., via EGL/GL interface 106g and/or libGLES_GPUNAME.so 106i if first app 1 is an Android app or the mobile OS is an Android OS) for driving the hardware device, e.g., local GPU 12', to render graphics. In this example, once a rendering command from daemon 26 is received, rendering module 17' may select a rendering API on the client accordingly, and use the rendering API to render graphics with GPU 12' on first computing device 100.

FIG. 4D illustrates the architecture of a first app 1' communicating with second computing device 200 (the server) or virtual machine 212 according to another example of the present invention. Referring to FIG. 4D, first app 1' may include a receiver 13' configured to receive rendering command from daemon 26. In one example, first app 1' or receiver 13' may include a native code library (or a plurality of native code libraries) for dispatching a rendering method/API on EGL/GL interface 106g or libGLES_GPUNAME.so 106i to render graphics. In this example, first app 1' (or receiver 13') may transmit rendering command to driver 111' (e.g., via EGL/GL interface 106g or libGLES_GPUNAME.so 106i) after receiving such rendering command from daemon 26, and the graphic(s) may be rendered with GPU 12' based on such rendering command. First app 1' (receiver 13' or the native code library) may include a dispatcher (not shown in FIG. 4D) for dispatching the corresponding part of EGL/GL interface 106g according to the rendering command. An exemplary piece of source code(s) relating to the dispatcher is as follows:

```
           ...... (the "......" means a part of the source code which may be ignored hereafter)
          bool init_gl2_dispatch()
           {
             const char *libName = getenv("ANDROID_GLESv2_LIB");
             if (!libName) libName = DEFAULT_GLES_V2_LIB;
             //
             // Load the GLES library
             s_gles2_lib = osUtils::dynLibrary::open(libName);
             if (!s_gles2_lib) return false;
             //
             // init the GLES dispatch table
             s_gl2.initDispatchByName(gl2_dispatch_get_proc_func, NULL);
             s_gl2_enabled = true;
             return true;
           }
          void *gl2_dispatch_get_proc_func(const char *name, void *userData)
           {
             if(!s_gles2_lib) {
                return NULL;
             }
             return (void *)s_gles2_lib->findSymbol(name);
           }
           ......
```

In one example, an exemplary source code(s) for dispatching a corresponding part of EGL/GL interface 106g to render a graphic (or a part of the graphic) based on a rendering command, for example, "glBindTexture," may be as follows:

```
           ......
           size_t gl2_decoder_context_t::decode(void *buf, size_t len, IOStream *stream)
           {
              size_t pos = 0;
              if (len < 8) return pos;
              unsigned char *ptr = (unsigned char *)buf;
              bool unknownOpcode = false;
           ......
                            break;
                            case OP_glBindTexture:
                             {
                            this->glBindTexture(*(GLenum *)(ptr + 8), *(GLuint *)(ptr + 8 + 4));
                            pos += *(int *)(ptr + 4);
                            ptr += *(int *)(ptr + 4);
                            }
           ......
```

In this example, the rendering command (the "glBindTexture"), the parameter related to the target (i.e., the "*(GLenum *)(ptr + 8)," which may be a location where the target can be accessed in the framebuffer or memory 10) or related to the texture (i.e., the "*(GLunit *)(ptr + 8 + 4)," which may also be a location where the texture can be accessed in the framebuffer or the memory 10) may be dispatched and then transmitted to EGL/GL interface 106g for rendering graphics.

In one example, the native code library may be practiced/implemented in an application package file (.apk) of first app 1' by using the Android NDK. In another example, the native code library may be practiced/implemented in another application package file (hereinafter the "native code library apk"), and an app including the native code library (hereinafter the "native code library app") may be formed on first computing device 100 after the application package file is installed on first computing device 100. In this example, if both application packages are installed on first computing device 100, first app 1 may receive rendering command and pass it to the native code library app (e.g., via an inter process communication or other communication(s) between first app 1' and the native code library app). Next, the native code library app may transmit rendering command to EGL/GL interface 106g for rendering with GPU 12'. Therefore, those skilled in the art understand that the native code library is not limited to be practice/ implemented in the apk of first app 1'.

Similarly, once receiving touch screen events, first app 1 (or 1') may transmit coordinates of the touch screen events (or transmit the touch screen events directly) to daemon 26, and second app 2 may respond according to the touch screen events via a virtual IO module/interface (e.g., vr_io_int 210c).

In one example, first app 1 (or 1') may further include an activity configured to display graphics on a screen output of first app 1 (or 1').

In one example, pixels of the rendered graphic may be stored in frame buffer 10' (or memory 10).

In one example, at least one of the rendering commands, parameters and/or textures may be retrieved/extracted when second app 2 uses the rendering API on the server or virtual machine 212 to render graphics.

Moreover, transmitter 19 may be configured to transmit a coordinate of an input even (e.g., touch screen event) received by first app 1 from daemon 26.

Moreover, those skilled in the art understand that second computing device 200 or the server may be implemented as a computing device capable of running the mobile OS (e.g., the Android OS). In this example, the aforementioned driver(s) or libraries in the mobile OS may run on second computing device 200, and therefore virtual machine 212 may not be needed.

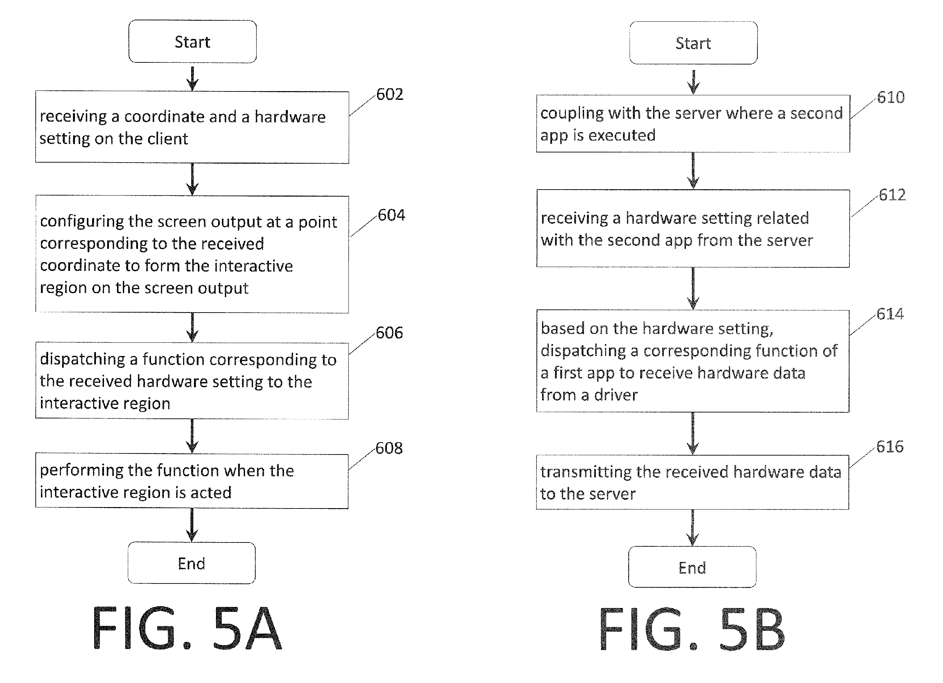

FIG. 5A is a flowchart illustrating a method of communication between first app 1 and the server (e.g., second computing device 200 and/or daemon 26) or virtual machine 212 according to an example of the present invention. In this example, the method relates to configuring a user interface 116 on a screen output displayed on first computing device 100 (the client), wherein the screen output is generated from second app 2 executed on second computing device 200 and streamed from second computing device 200 to be displayed on first computing device 100. Referring to FIG. 5A, in step 602, receiver 13 of first app 1 may receive a coordinate and a hardware setting from second computing device 200 (or virtual machine 212). In step 604, first app 1 may configure the screen output of first computing device 100 at a point corresponding to the received coordinate to form a user interface 116. In step 606, a dispatcher 15 may dispatch a function/method, including but not limited to one of hardware-related modules 17, corresponding to the received hardware setting to user interface 116. The dispatched hardware-related modules 17 may perform a function when user interface 116 is acted.

In one example, the hardware setting relates to configuring first app 1 to take a picture. Accordingly, user interface 116 may be configured as a shutter button and the picture (the hardware data) generated when user interface 116 is acted (shutter button pressed) may be transmitted to second computing device 200/server (or the virtual machine 212 or the second app 2).

In another example, the function or method may include receiving hardware data from a Bluetooth, a Wi-Fi, an NFC, a camera, a GPS, a gyroscope, an e-compass and an accelerometer. Moreover, step 608 may further include transmitting hardware data related to the function to virtual machine 212 when user interface 116 is acted.

In one example, virtual machine 212 may be configured to transmit different kinds of hardware settings to the client.

In one example, the client (e.g., first computing device 100) may include a plurality of functions and at least one of the functions may be dispatched to user interface 116 based on the received hardware setting.

In one example, at least one of the coordinates and hardware settings from the server is transmitted via internet.

In one example, the method of the present invention may further include steps of receiving a value to set a length or a width of user interface 116, and configuring user interface 116 having the length or the width based on the value.

In one example, the method of the present invention may further include a step of receiving an advertisement when or prior to the screen output of first app 1 is configured to form user interface 116. Since it may take time to send the touch event, to receive the coordinate and hardware setting and to complete the configuration of user interface 116, this time lapse may be used to display advertisement.

FIG. 5B illustrates a method of communication between first app 1 and the server or virtual machine 212 according to another example of the present invention. In this example, the method relates to transmitting hardware data from driver 111 on first computing device 100 (the client) to the server or virtual machine 212. Referring to FIG. 5B, in step 610, first app 1 may couple with the server or virtual machine 212 where second app 2 is executed. In step 612, receiver 13 may receive a hardware setting relating to second app 2 from the server or virtual machine 212. Based on such hardware setting, a dispatcher 15 may dispatch a function of first app 1, e.g., one of a plurality of hardware-related modules 17, to receive hardware data from driver 111 in step 614. In this example, the function of first app 1 may be to couple with driver 111 to receive hardware data from driver 111. Moreover, transmitter 19 may transmit the received hardware data to the server or virtual machine 212 in step 616.

In one example, first app 1 may include a plurality of functions (relating to a hardware-related modules 17), each of which may be configured to receive a plurality of hardware data on the client. Moreover, each function may be configured to couple with a plurality of drivers on the client in order to receive hardware data. In this example, the drivers may include a Bluetooth, a Wi-Fi, an NFC, a camera, a GPS, a gyroscope, an e-compass and an accelerometer of first computing device 100 (the client), and the function may be configured to receive hardware data from the Bluetooth, the Wi-Fi, the NFC, the camera, the GPS, the gyroscope, the e-compass and the accelerometer.

In this example, dispatcher 15 may be configured to select a function of first app 1 from a plurality of functions of first app 1 based on the received hardware setting.

In one example, the method of the present invention may further include steps of configuring user interface 116 on the screen output of first app 1 (displayed on the client), and transmitting the received hardware data to the server or virtual machine 212 when user interface 116 is acted.

In one example, the method of the present invention may further include steps of buffering hardware data (by using the buffering module not shown) when network service is interrupted on the client, and transmitting the hardware data to the server or virtual machine 212 (e.g., with transmitter 19) when network service resumes.

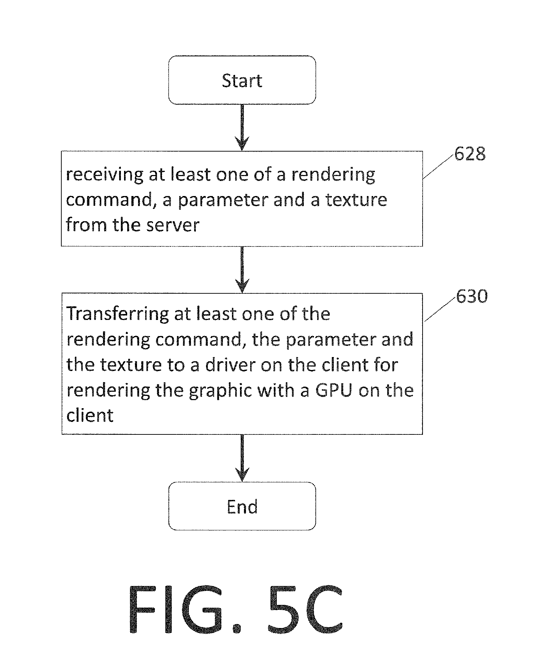

FIG. 5C is illustrates a method of communication between first app 1' and the server or virtual machine 212 according to other example of the present invention. In this example, the method relates to rendering a graphic of second app 200 executed on the server or virtual machine 212 with first app 1' on the client. Referring to FIG. 5C, in step 628, receiver 13' may receive at least one rendering commands (e.g., an OpenGL ES command), a corresponding parameter (e.g., RGB values/color codes, depths, etc.) and/or a texture from the server (e.g., second computing device 200, virtual machine 212 or daemon 26). In step 630, receiver 13' may transfer the rendering command, parameter and/or the texture to driver 111' on the client to render graphics with GPU 12' on the client.

In one example, the rendering command and/or parameter may be intercepted within virtual machine 212 and transmitted to first app 1' via internet. In another example, the rendering command and/or parameter may be intercepted before being transmitted to library 206i or the virtual driver (not shown but coupled with library 206i). In other example, the rendering command and/or parameter may be intercepted outside virtual machine 212 but still inside the server. For example, the rendering command and/or parameter may be intercepted before being sent to a GPU if the server includes a GPU.

In one example, first app 1' may further include rendering module 17'. Rendering module 17' may be a function or a rendering method. Rendering module 17' may also be a native code library written in C or C++ that can be compiled as a .so file in the apk file of first app 1 for dispatching a part of a rendering interface (e.g., EGL/GL interface 106g) to drive GPU 12' to render graphics based on the rendering command received by receiver 13'. In this example, rendering module 17' may also be one of a plurality of hardware-related modules 17. In another example, first app 1' may further include the plurality of hardware-related modules 17 and dispatcher 15 configured to dispatch rendering module 17' from the hardware-related modules 17 when rendering command is received.

In one example, rendering module 17' may use a rendering API (e.g., OpenGL ES API) on the client to render graphics based on the rendering command.

The rendering command and/or parameter/texture may be transmitted to driver 111', and driver 111' may drive GPU 12' to render graphics based on such command. In one example, the graphics may be kept in frame buffer 10' first and then be displayed by a display device (not shown with first computing device 100, and it can be an IC or circuit to control the screen of first computing device 100). In this example, the method may further include a step of displaying a screen output on the client, wherein the screen output may include the rendered graphics.

In another example, a texture related to the rendering command or the parameter may be transmitted from the server, and receiver 13' may receive such texture transmitted from the server. In this example, the dispatched rendering method may use a rendering API on the client to render graphics based on rendering command with at least one of the corresponding parameter and the texture.

In one example, at least one of the rendering commands and the corresponding parameters may be retrieved when second app 2 tries to use a rendering API (e.g., via EGL/GL interface 206g) on virtual machine 212 to render graphics. In another example, in addition to the rendering commands and the corresponding parameters, textures may also be retrieved when second app 2 uses a rendering API.

In one example, virtual machine 212 may couple with daemon 26. In this example, once a user touches a point on UI 118 or the screen output of first app 1 (which may include rendered graphics), a coordinate corresponding to the touched point may be transmitted to daemon 26. Next, an input event associated with the coordinate may be generated and inputted to second app 2.

From the foregoing, it will be appreciated that specific embodiments have been described herein for purposes of illustration, but that various modifications may be made without deviating from the spirit and scope of the present technology. Moreover, aspects described in the context of particular embodiments may be combined or eliminated in other embodiments. Further, although advantages associated with certain embodiments have been described in the context of those embodiments, other embodiments may also exhibit such advantages, and not all embodiments need necessarily exhibit such advantages to fall within the scope of the present technology.

## Claims

1. A method of generating user interface on a client, the method comprising the steps of:
coupling the client with a server where an app is executed;
receiving a hardware setting related to the app from the server;
transmitting the hardware setting to a driver on the client; and
configuring the user interface on the client with the driver based on the hardware setting.

2. The method of claim 1, further comprising the steps of:
dispatching a function corresponding to the hardware setting to the user interface; and
performing the function when the user interface is acted.

3. The method of claim 2, wherein the step of performing the function when the user interface is acted further comprises transmitting hardware data associated with the function to the server when the user interface is acted.

4. The method of claim 1, wherein the hardware setting comprises a rendering command, parameter or texture.

5. The method of claim 1 or claim 4, wherein the step of configuring the user interface on the client further includes rendering graphic of the app with a GPU on the client.

6. The method of claim 5, wherein the step of transmitting the hardware setting to a driver on the client to render graphic of the app with a GPU on the client further comprising the step of:
using a rendering API on the client to render graphic of the app based on the hardware setting.

7. The method of claim 4, wherein the rendering command, parameter or texture is extracted when the app on the server uses a rendering API to render graphic.

8. The method of claim 2, wherein the function comprises receiving hardware data from a Bluetooth, a Wi-Fi, an NFC, a camera, a GPS, a gyroscope, an e-compass or an accelerometer.

9. The method of claim 1, wherein the app is executed on a virtual machine on the server to transmit the hardware data to the client.

10. The method of claim 3 further comprising the steps of:
buffering the hardware data when the client experiences network interruption; and
transmitting the hardware data to the server when network service resumes.

11. The method of claim 5, wherein a second app is executed on the client to render graphic of the app on the server with a GPU on the client.

12. The method of claim 11, wherein the second app executed on the client comprises:
a receiver configured to receive the rendering command, parameter or texture from the server and transmit the rendering command, parameter or texture to a driver related to a GPU on the client to render the graphic.

13. The second app of claim 11 further comprising:
a rendering module configured to use a rendering API on the client to render graphic based the rendering command, parameter or texture.

14. The second app of claim 13 further comprising:
a plurality of hardware-related modules comprising the rendering module; and
a dispatcher configured to dispatch the rendering module to render graphic based on the rendering command, parameter or texture.

15. The second app of claim 11, further comprising:
a transmitter configured to transmit a coordinate to the server, wherein an input event associated with the coordinate is generated and inputted to the app on the server.
